# EUROPEAN PATENT APPLICATION

(11) **EP 1 267 094 A2**
(43) Date of publication of application: **18.12.2002**
(21) Application number: 02077248.9
(22) Date of filing: 10.06.2002
(51) Int. Cl.: F16G 13/16

(54) **Cable carrying chain link**

(30) Priority: 15.06.2001 IT MI20010326 U
(71) Applicant: Mauri, Giovanni, 20052 Monza (IT)
(72) Inventor: Mauri, Giovanni, 20052 Monza (IT)
(74) Representative: Riccardi, Sergio

(57) **Abstract**

Cable carrying chain link comprising a pair of lateral elements (2,3) mutually matching through a number of link studs (4), where at least one of said lateral elements (2) has elastic parts in the matching area with the other of such lateral elements (3) belonging to the following link (1).

## Description

The present invention is about a cable carrying chain link.

A number of different cable carrying chains for energy transportation through specific mobile structures have been known for a long time.

These chains usually have a number of elements or links restrained to each other in such a way that between them there is a relative motion of the rotatory kind. More precisely, said rotation is not free, but it is limited so that during the linear forward/backward motion of a chain's end, the bending radius of the chain itself would form.

The previously described chains, even though they solve said technical problem, they have an important inconvenience.

This is caused by the considerable noisiness of the chains thus assembled. As a matter of fact, in order to reduce the relative motion between them, two consecutive links have on one of them two or more protrusions or "noses" in their contact part, and corresponding blind or through slots on the other one. These protrusions block the link's rotation by stopping with an impact at the bottom of the slot; the sequence of impacts during the chain's motion is what creates its bothering noisiness.

The object of the present invention is that of remedying the inconveniences belonging to the earlier state of the art.

The invention's object is thus an easily making and reliable cable carrying chain link, that without jeopardizing the mechanical efficiency of the chain formed by a number of such links, would make said chain significantly silent during its operation.

Briefly, according to the invention, a cable carrying chain link comprising a pair of lateral elements mutually matching through a number of link studs, where at least one of said lateral elements has elastic parts in the matching area with the other of such lateral elements belonging to the following link.

The cable carrying chain link according to the invention, is characterized by the fact of having the features described in claim 1.

Further advantageous characteristics are recited in the dependent claims.

Other advantages, details and particulars of the cable carrying chain link according to the invention, will be better highlighted through an examination of the following description, with reference to the annexed drawings wherein a preferred embodiment is shown in an explanatory but not limiting way.
Figure 1 is a perspective view of a cable carrying chain link according to the invention;

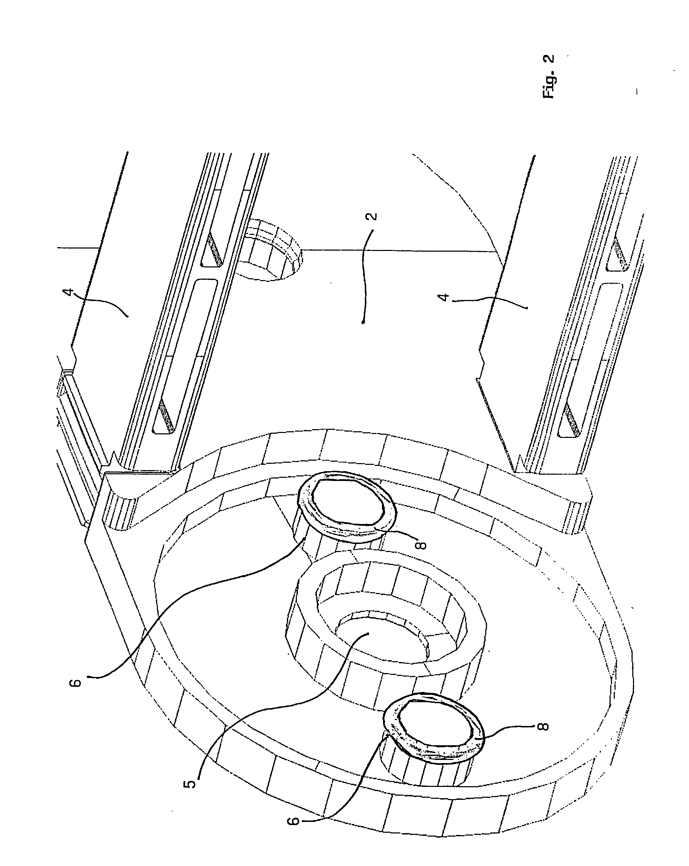

Figure 2 is a partial perspective view of the link illustrated in figure 1; and

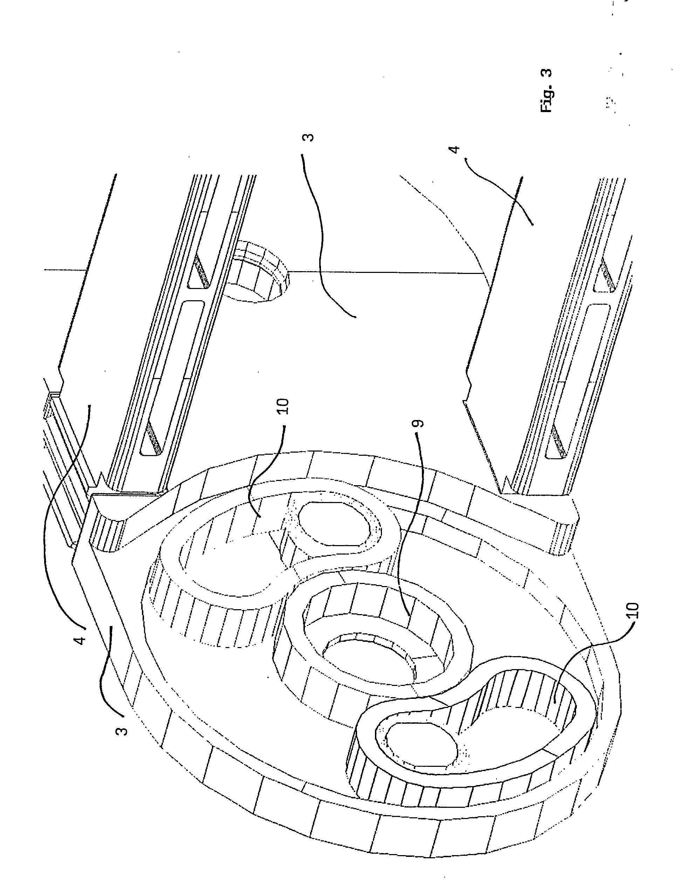

Figure 3 is a further partial perspective view of the link illustrated in figure 1.

Referring to the previously described figures, the cable carrying chain link 1 according to the invention comprises a pair of lateral elements 2,3, connected to each other through two link studs 4.

Said lateral elements 2,3, have a number of complementary protrusions and grooves in order to allow the matching between two consecutive links.

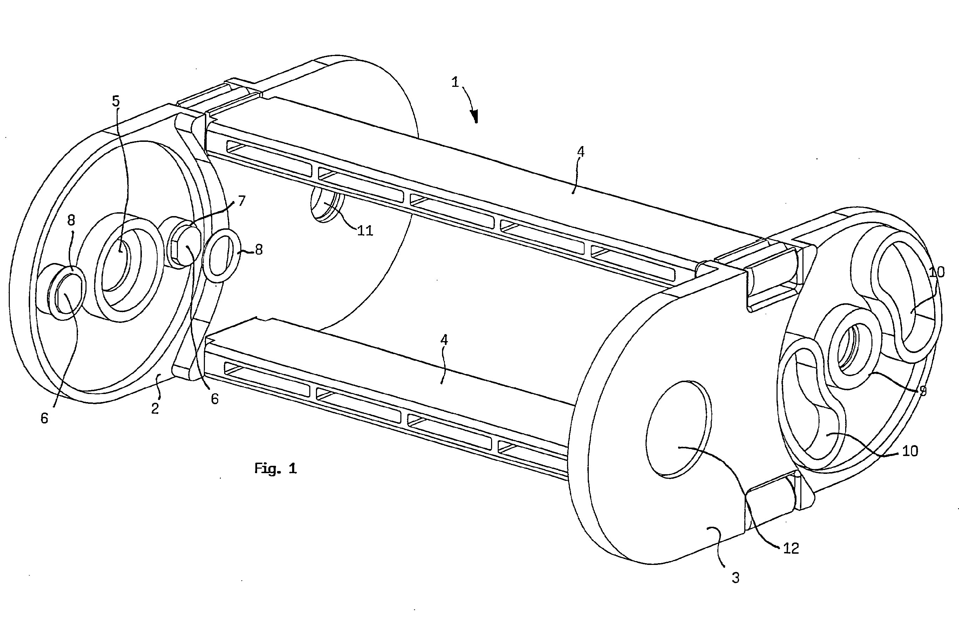

More specifically, in the link 1 according to the invention, the lateral element 2 (to the left in figure 1) has a central hole 5 towards the inside of the link 1 itself, and, lateral to it in a symmetric position, two protrusions or "noses" 6.

Usefully, on each protrusion 6 a housing 7 is provided in order to receive an elastic element, preferably a packing 8 of the O-ring kind.

The other lateral element identified to the right in figure 1 and indicated with the reference number 3 has towards the outside of said link 1 a central pin 9 fit for the matching with said central hole 5, while lateral and symmetrical to it two slots 10 are suitable for the matching with said protrusions 6 equipped with 0-ring 8.

The other parts of the lateral elements 2 and 3, have, as in the links known to the state of the art, a pin 11 and a hole 12 respectively for the corresponding matching.

During the assembly of more consecutive links the central pin 9 and the slots 10 of one link will be matched with the central hole 5 and the protrusions 6 of the other one as also each pin 11 will be matched with the respective hole 12.

During the operation of a chain made with a number of links 1 according to the invention, each time that a protrusion 6 hits the respective slot 10, it will do it with the part that houses an elastic element, that is the packing 8 of the O-ring kind.

In such manner, the limitation of the rotation between two consecutive links does not occur anymore with a direct impact between the two links' parts, but instead with the interposition of the rubber packing 8, which reduces the noisiness by absorbing the energy caused by the impact .

Obviously, several modifications, additions, adjustments, variations and/or substitutions could be made to the illustrative embodiment previously described in an explanatory but not limiting way, without falling out of the scope of protection as also recited in the following appended claims.

## Claims

1. A cable carrying chain link comprising a pair of lateral elements (2,3) mutually matching through a number of link studs (4), **characterized in that** at least one of said lateral elements (2) has elastic parts in the matching area with the other of such lateral elements (3) belonging to the following link (1).

2. The cable carrying chain link according to claim 1, **characterized in that** one of said lateral elements (2) has a central hole (5) and a number of protrusions (6) towards the inside of said link (1) arranged symmetrically to said central hole (5), whereas the other of said lateral elements (3) has towards the outside of such link (1) a central pin (9) ad a number of slots (10) that can be matched to said central hole (5) and to the protrusions (6) respectively.

3. The cable carrying chain link according to claim 2, **characterized in that** said protrusions (6) each have a housing (7) suitable for receiving a packing (8).

4. The cable carrying chain link according to claim 3, **characterized in that** said packing (8) is of the O-ring kind.
